# EUROPEAN PATENT APPLICATION

(11) **EP 3 603 853 A1**
(43) Date of publication of application: **05.02.2020**
(21) Application number: 18778149.7
(22) Date of filing: 27.03.2018
(51) Int. Cl.: B22F 3/105, B22F 3/16, B33Y 10/00, B33Y 30/00

(54) **MODELING SYSTEM AND MODELING METHOD**

(30) Priority: 31.03.2017 JP 2017069706
(71) Applicant: Nikon Corporation, Tokyo 108-6290 (JP)
(72) Inventor: SHIBAZAKI, Yuichi, Tokyo 108-6290 (JP)
(74) Representative: Hoffmann Eitle
(86) International application number: PCT/JP2018/012465
(87) International publication number: WO 2018/181334

(57) **Abstract**

A shaping system which forms a three-dimensional shaped object on a target surface (TAS) using a beam is equipped with: a beam irradiation section (520) which emits beams (LB₁, LB₂) passing through optical paths tilted with respect to an axis (AX); a material supplying section (530) which has a material supplying port and supplies along the axis (AX) a powdered material (PD) irradiated with the beams from the beam irradiation section; a cover member (30) which has an inner surface that gradually converges from a side at one end to a side at the other end and has an outlet formed at the other end through which the beams from the beam irradiation section pass; and a gas supply apparatus (42) which supplies inert gas via a gas supplying port into a space (30a) inside the cover member, and the inert gas flows outside the space via the outlet of the cover member, and the shaping material is supplied outside the space via the outlet of the cover member.

## Description

### TECHNICAL FIELD

The present invention relates to shaping systems and shaping methods, and more particularly to a shaping system and a shaping method to form a three-dimensional shaped object on a target surface using a beam. The shaping system and the shaping method according to the present invention can be suitably applied to forming a three-dimensional shaped object by rapid prototyping (may also be called 3D printing, additive manufacturing, or direct digital manufacturing).

### BACKGROUND ART

Rapid prototyping (while it may also be called 3D printing, additive manufacturing, or direct digital manufacturing, hereinafter it will be referred to in general as rapid prototyping) is a technique used to generate a 3D (three-dimensional) shape directly from CAD data. Shaping devices that form three-dimensional shaped objects using rapid prototyping such as 3D printers when classifying by materials to be handled can be grouped roughly into devices that handle resin and devices that handle metal. The metal three-dimensional shaped object made by rapid prototyping is to be used as a part of an actual machine structure (even if it is a mass produced item or a prototype). As existing metallic 3D printers (hereinafter shortly referred to as a M3DP (Metal 3D Printer)), two types of printers; PBF (Powder Bed Fusion), and DED (Directed Energy Deposition) are well known.

DED employs a method of depositing metal material which is dissolved on a processing subject. For example, powder metal is to be jetted near a focal point of a laser beam condensed by a condensing lens (for example, refer to PTL 1) .

In DED, waste of the powder material is restrained since the powder material is supplied as necessary from a processing head.

As is described above, while improvement is being made on handling and the like of powder metals which are to be raw materials, DED has many points to be improved compared to PBF.

### CITATION LIST

### PATENT LITERATURE

[PTL 1] U.S. Patent Application Publication No. 2003/0206820

### SUMMARY OF THE INVENTION

According to a first aspect of the present invention, there is provided a shaping system which forms a three-dimensional shaped object on a target surface using a beam, comprising: a beam irradiation section that emits a beam which passes through an optical path tilted with respect to an axis; a material supplying section which has a material supplying port and supplies along the axis powdered shaping material to be irradiated by a beam from the beam irradiation section; a cover member which has an inner surface that converges gradually from a side at one end to a side at the other end and has an outlet formed in the side at the other end through which the beam from the beam irradiation section passes; and a gas supply apparatus which supplies inert gas to a space inside the cover member via a gas supplying port, wherein the inert gas flows outside the space via the outlet of the cover member, and the shaping material is supplied outside the space via the outlet of the cover member.

In this description, target surface is a surface on which a target portion for shaping is set.

According to a second aspect of the present invention, there is provided a shaping system which forms a three-dimensional shaped object on a target surface using a beam, comprising: a beam irradiation section that emits a beam which passes through an optical path tilted with respect to an axis; a material supplying section which has a material supplying port and supplies along the axis powdered shaping material to be irradiated by a beam from the beam irradiation section; a cover member which has an inner surface arranged to surround at least a part of the optical path and has an outlet formed through which the beam from the beam irradiation section passes; and a gas supply apparatus which supplies inert gas to a space inside the cover member via a gas supplying port, wherein the inert gas flows toward the outlet along the inner surface of the cover member in a swirling flow, the inert gas flows outside the space via the outlet of the cover member, and the shaping material is supplied outside the space via the outlet of the cover member.

According to a third aspect of the present invention, there is provided a shaping system which forms a three-dimensional shaped object on a target surface using a beam, comprising: a beam irradiation section that emits a beam which passes through an optical path tilted with respect to an axis; a material supplying section which has a material supplying port and supplies along the axis powdered shaping material to be irradiated by a beam from the beam irradiation section; a cover member which has an inner surface arranged to surround at least a part of the optical path and has an outlet formed through which the beam from the beam irradiation section passes; and a gas supply apparatus which supplies inert gas to a space inside the cover member via a gas supplying port, wherein the inert gas flows toward the outlet in a swirling flow around the axis, the inert gas flows outside the space via the outlet of the cover member, and the shaping material is supplied outside the space via the outlet of the cover member.

According to a fourth aspect of the present invention, there is provided a shaping system which forms a three-dimensional shaped object on a target surface using a beam, comprising: a beam irradiation section that emits a beam which passes through an optical path tilted with respect to an axis; a material supplying section which has a material supplying port and supplies powder serving as a shaping material along the axis; a cover member which has an outlet formed through which the beam from the beam irradiation section passes; and a gas supply apparatus which supplies inert gas to a space inside the cover member via a gas supplying port, wherein the inert gas flows outside the space via the outlet of the cover member, and the shaping material is supplied on the target surface outside the space via the outlet of the cover member.

According to a fifth aspect of the present invention, there is provided a shaping method in which a three-dimensional shaped object is formed on a target surface using a beam, comprising: emitting a beam, which passes through an optical path tilted with respect to an axis, from a beam irradiation section; supplying along the axis a powdered shaping material which is to be irradiated by the beam; and supplying an inert gas, via a gas supplying port, into a space inside a cover member which has an inner surface that gradually converges from a side at one end to a side at the other end and has an outlet formed at the side at the other end through which a beam from the beam irradiation section passes, wherein the inert gas flows outside the space via the outlet of the cover member, and the shaping material is supplied to the target surface outside the space via the outlet of the cover member.

According to a sixth aspect of the present invention, there is provided a shaping method in which a three-dimensional shaped object is formed on a target surface using a beam, comprising: emitting a beam, which passes through an optical path tilted with respect to an axis, from a beam irradiation section; supplying along the axis a powdered shaping material which is to be irradiated by the beam; and supplying an inert gas, via a gas supplying port, into a space inside a cover member which has an inner surface arranged to surround at least a part of the optical path and has an outlet formed through which a beam from the beam irradiation section passes, wherein the inert gas flows toward the outlet along the inner surface of the cover member in a swirling flow, the inert gas flows outside the space via the outlet of the cover member, and the shaping material is supplied to the target surface outside the space via the outlet of the cover member.

According to a seventh aspect of the present invention, there is provided a shaping method in which a three-dimensional shaped object is formed on a target surface using a beam, comprising: emitting a beam, which passes through an optical path tilted with respect to an axis, from a beam irradiation section; supplying along the axis a powdered shaping material which is to be irradiated by the beam; and supplying an inert gas, via a gas supplying port, into a space inside a cover member which has an inner surface arranged to surround at least a part of the optical path and has an outlet formed through which a beam from the beam irradiation section passes, wherein the inert gas flows toward the outlet in a swirling flow around the axis, the inert gas flows outside the space via the outlet of the cover member, and the shaping material is supplied to the target surface outside the space via the outlet of the cover member.

According to an eighth aspect of the present invention, there is provided a shaping method in which a three-dimensional shaped object is formed on a target surface using a beam, comprising: emitting a beam, which passes through an optical path tilted with respect to an axis, from a beam irradiation section; supplying along the axis a powdered shaping material which is to be irradiated by the beam; and supplying an inert gas, via a gas supplying port, into a space inside a cover member which has an inner surface that gradually converges from a side at one end to a side at the other end and has an outlet formed at the side at the other end through which a beam from the beam irradiation section passes, wherein the inert gas flows outside the space via the outlet of the cover member, and the shaping material is supplied to the target surface outside the space via the outlet of the cover member.

### BRIEF DESCRIPTION OF DRAWINGS

FIG. 1 is a block diagram showing an overall structure of a shaping system according to an embodiment.
FIG. 2 is a view showing a shaping system along with a table on which a workpiece is mounted.
FIG. 3 is a view showing a state in which a parallel beam from a light source system irradiates a mirror array and an incidence angle with respect to a condensing optical system of reflection beams from each of a plurality of mirror elements are individually controlled.
FIG. 4 shows a material supplying section which the shaping system is equipped with, along with a condensing optical system and the like.
FIG. 5 is a view showing a barrel 85 and the part below in FIG. 2 enlarged, along with a neighboring area of target portion TA on workpiece W.
FIG. 6 is a block diagram indicating an input/output relation of a controller which mainly structures a control system of shaping system 100.
FIG. 7 is a view used to explain a modified example in which an inert gas is supplied inside a cover member via a plurality of supplying ports, and a flow of gas that flows vertically is generated.

### DESCRIPTION OF EMBODIMENTS

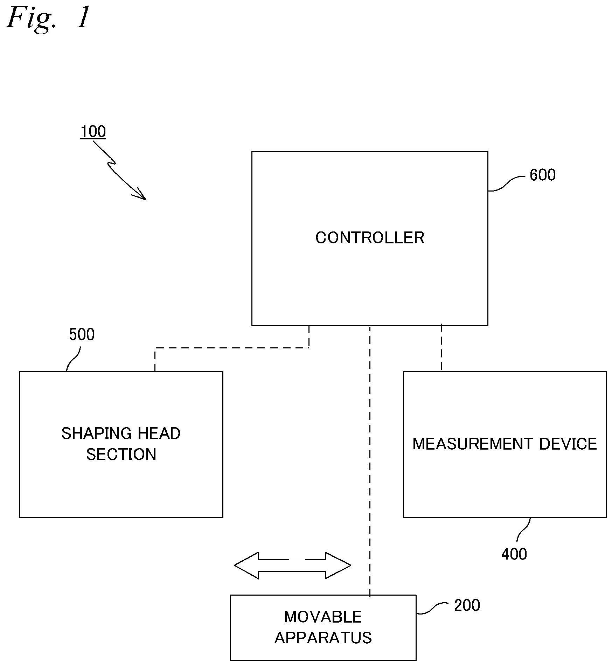

An embodiment will be described below, based on FIGS. 1 to 6. FIG. 1 shows an overall structure of a shaping system 100 according to the embodiment.

Shaping system 100 is an M3DP of a DED method. While shaping system 100 can be used to form a three-dimensional shaped object on a table to be described later on by rapid prototyping, the system can also be used to perform additive manufacturing by three-dimensional shaping on a workpiece (e.g., existing parts). In the embodiment, the latter case will be described centering on performing additive manufacturing on a workpiece.

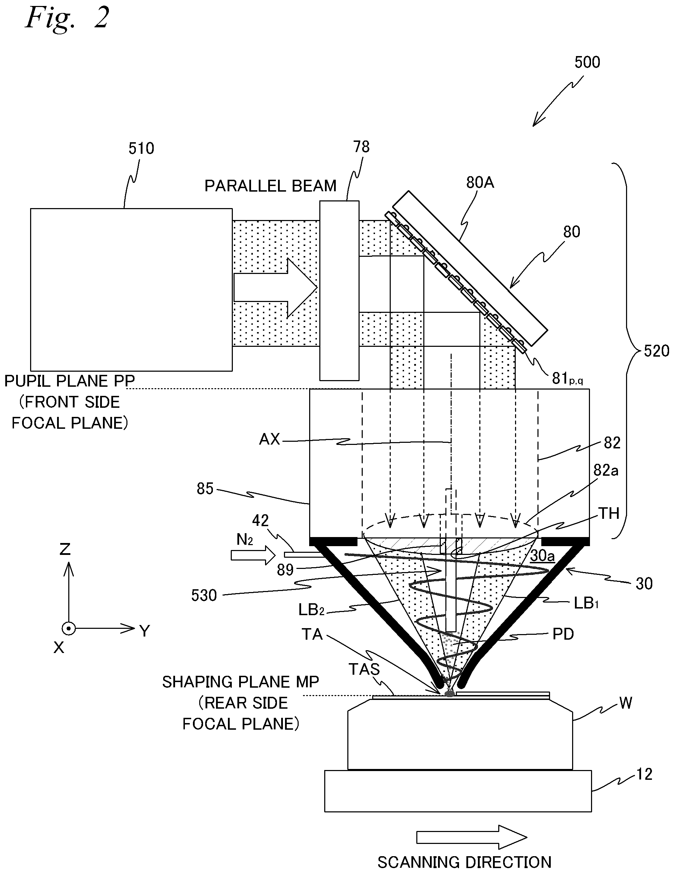

Shaping system 100 is equipped with a movable apparatus 200, a measurement device 400, a shaping head section 500, and a controller 600 that controls the whole shaping system 100 including each of these parts. Of these parts, measurement device 400 and shaping head section 500 are arranged separately apart in a predetermined direction. In the description below, for convenience, measurement device 400 and shaping head section 500 are to be arranged separately in an X-axis direction to be described later on (refer to FIG. 2) .

FIG. 2 shows shaping head section 500, along with a table 12 on which a workpiece W is mounted. In the description below, a direction orthogonal to the page surface in FIG. 2 will be referred to as an X-axis direction, a lateral direction of the page surface will be referred to as a Y-axis direction, a direction orthogonal to an X-axis and a Y-axis will be referred to as a Z-axis direction, and rotation (tilt) directions around the X-axis, the Y-axis, and the Z-axis will be referred to as θx, θy, and θz directions, respectively.

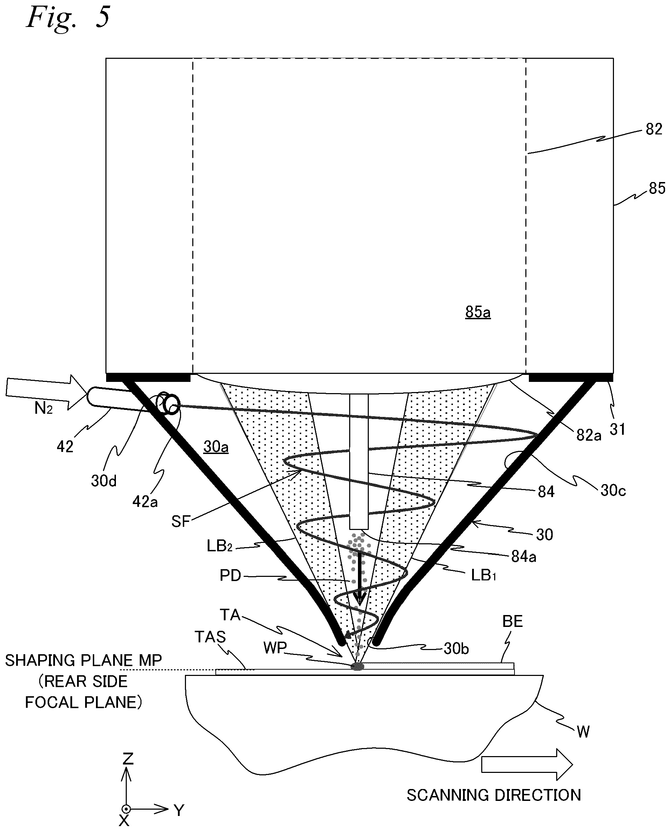

Movable apparatus 200 changes position and attitude of a shaping target surface (here, a surface where a target portion TA is set on workpiece W) TAS (e.g., refer to FIGS. 2 and 5) . Specifically, by moving table 12 on which workpiece W having target surface TAS is mounted in directions of six degrees of freedom (each of the X-axis, the Y-axis, the Z-axis, the θx, the θy, and the θz directions), position change is performed of the target surface in directions of six degrees of freedom. In this description, as for the table, the workpiece, or the target surface or the like, positions in directions of three degrees of freedom, which are the θx, the θy, and the θz directions, will be collectively called "attitude" as appropriate, and corresponding to this, positions in the remaining directions of three degrees of freedom (the X-axis, the Y-axis, and the Z-axis directions) will be collectively called "position" as appropriate.

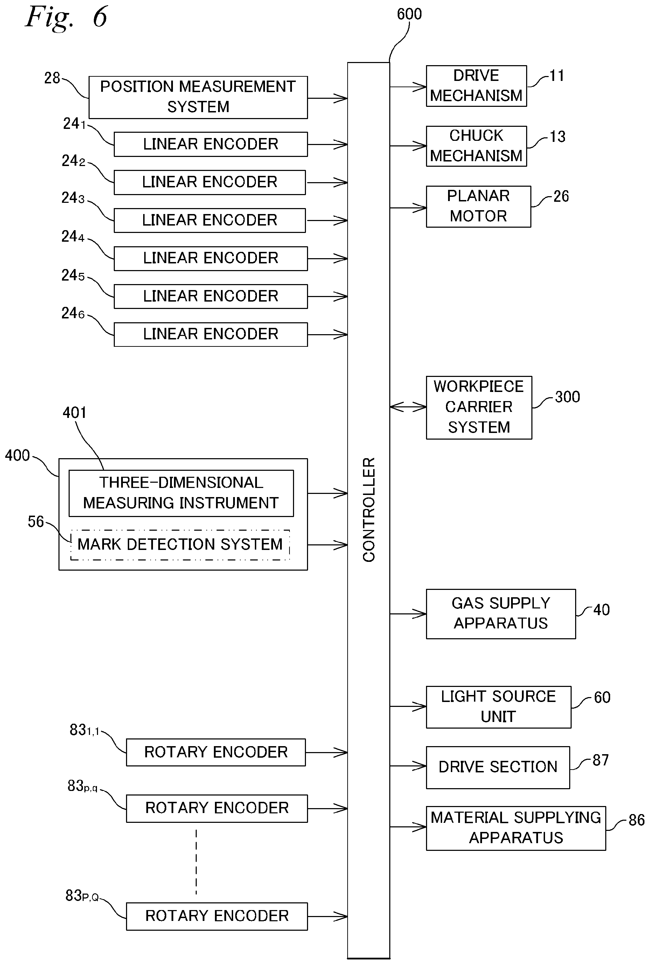

Movable apparatus 200 is equipped with table 12 on which workpiece W is mounted, a drive mechanism 11 (not shown in FIG. 2, refer to FIG. 6) arranged on a floor surface parallel to an XY plane that changes position and attitude of table 12, and a planar motor 26 (not shown in FIG. 2, refer to FIG. 6) for moving all of table 12, workpiece W, and drive mechanism 11 in a two-dimensional direction along the floor surface. Here, movable apparatus 200 is equipped with a slider that structures a base platform as an example of drive mechanism 11 of table 12, and table 12 that structures an end effector, and has a Stewart platform type 6-DOF parallel link mechanism structured similarly to that of the one disclosed in, for example, U.S. Patent No. 6,940,582. Since movable apparatus 200 has the Stewart platform type 6-DOF parallel link mechanism as drive mechanism 11 of table 12, it has features such as high accuracy, high rigidity, large supporting force, easy inverse kinematic calculation, and the like. Note that movable apparatus 200 is not limited to the apparatus whose table can be moved in directions of six degrees of freedom.

In shaping system 100 according to the embodiment, at the time of additive manufacturing and the like to the workpiece, position and attitude of the workpiece (table 12) is controlled with respect to shaping head section 500, or to be more specific, with respect to a beam from a beam irradiation section to be described later on, in order to form a shaped object of a desired shape with respect to the workpiece and the like In principle, reversely, the beam from the beam irradiation section may be movable, or both the beam and the workpiece (table) may be movable.

Table 12 has workpiece W subject to additive manufacturing mounted on its upper surface. At table 12, a chuck mechanism 13 (not shown in FIG. 2, refer to FIG. 6) is provided to fix workpiece W. As chuck mechanism 13, for example, a mechanical chuck, a vacuum chuck or the like is used. Note that the shape of table 12 may be any shape such as a rectangular-plate shape or a disk-like shape. Controller 600 controls position and attitude of table 12 via drive mechanism 11 (parallel link mechanism) using inverse kinematic calculation, in a method similar to the one disclosed in, for example, U.S. Patent No. 6,940,582. Note that the parallel link mechanism is equipped with six expandable rods (links), and the length of each rod is controlled by controller 600 via six expansion mechanisms that individually expand/contract each rod, and length information of each rod (change amount of length from a reference state) is measured by linear encoders 24₁ to 24₆ (refer to FIG. 6). Note that the linear encoders are actually provided at the six expandable rods that structure the parallel link mechanism, however, the linear encoders are shown separate from drive mechanism 11 for convenience in FIG. 6.

As planar motor 26, a moving magnet type (or a moving coil type) air floating planar motor is used. That is, the entire drive mechanism 11 including table 12 is floatingly supported on the floor surface (or the base) on which stators of planar motor 26 are provided, by a plurality of air bearings provided along with movers of planar motor 26 described earlier on the bottom surface of the slider. By planar motor 26, the entire drive mechanism 11 including table 12 is moved on the floor surface (or the base). In the embodiment, table 12 of movable apparatus 200 can freely move between measurement device 400 and shaping head section 500 shown in FIG. 1 and a workpiece carrier system 300 (not shown in FIG. 1, refer to FIG. 6). Note that movable apparatus 200 may be equipped with a plurality of tables 12 that each mounts workpiece W. For example, while processing is performed using shaping head section 500 on a workpiece held by one of the plurality of tables, measurement using measurement device 400 may be performed on a workpiece held by another table. In such a case as well, each table may be freely movable between measurement device 400 and shaping head section 500 and workpiece carrier system 300 (not shown in FIG. 1, refer to FIG. 6) . Or, in the case a structure is employed in which a table which exclusively holds the workpiece on measurement using measurement device 400 and a table which exclusively holds the workpiece on processing using shaping head section 500 are provided, and carry-in and carry-out of the workpiece with respect to the two tables is made possible by workpiece carrier system 300 and the like, the slider which structures the base platform of each parallel link mechanism may be fixed to the floor surface (or the base) . Even in the case a plurality of tables 12 is provided, each table 12 can be moved in directions of six degrees of freedom, and the position of the directions of six degrees of freedom can be controlled.

Note that the motor is not limited to the air floating motor as planar motor 26, and a planar motor of a magnetic levitation method may also be used. In the latter case, air bearings do not have to be provided in the slider.

With controller 600, by controlling at least one of magnitude and direction of the current supplied to each coil of the coil units which structure planar motor 26, the slider can be moved freely in X, Y two-dimensional directions on the floor surface (or the base).

In the embodiment, movable apparatus 200 is equipped with a position measurement system 28 (refer to FIG. 6) which measures position information of the slider in the X-axis direction and the Y-axis direction. Position measurement system 28 can be structured, for example, by an encoder system or an interferometer system or the like.

In the embodiment, as it will be described later on, position information (shape information in the embodiment) in a three-dimensional space of at least a part of a target surface (e.g., upper surface) on workpiece W mounted on table 12 is measured by measurement device 400, and additive manufacturing (shaping) is performed on workpiece W after the measurement. Accordingly, controller 600, by associating the measurement results, measurement information of each length of the six rods of the parallel link mechanism at the time of measurement measured by linear encoders 24₁ to 24₆, and measurement results of position measurement system 28 when measuring the shape information of at least a part of the target surface on workpiece W, can correlate the position and the attitude of the target surface on workpiece W mounted on table 12 with a reference coordinate system (hereinafter called a table coordinate system) of shaping system 100. This will enable position control in directions of six degrees of freedom of target surface TAS on workpiece W with respect to a target value, by an open loop control of the position of table 12 in directions of six degrees of freedom based on measurement information of each length of the six rods of the parallel link mechanism and measurement results of position measurement system 28. Note that the position information in the three-dimensional space described earlier that should be measured by measurement device 400 which is used to allow position control in directions of six degrees of freedom with respect to the target value on of the target surface on workpiece W by the open loop control of the position of table 12 in directions of six degrees of freedom is not limited to shape, as long as the information is three-dimensional position information of at least three points which corresponds to the shape of the target surface.

Note that in the embodiment, a linear motor may be used instead of planar motor 26 as the driver used to drive the slider within the XY plane.

Also, the mechanism to move table 12 may be structured using a parallel link mechanism of a type other than the Stewart platform type 6-DOF parallel link mechanism described earlier, or a mechanism other than the parallel link mechanism. The structure of the mechanism for moving the table (s) of movable apparatus 200, in short, may be any structure as long as the table (movable member) on which the workpiece is mounted can move at least in directions of five degrees of freedom; in directions of three degrees of freedom within the XY plane, the Z-axis direction, and a tilt direction (θx or θy) with respect to the XY plane. In this case, table 12 itself may be floatingly supported (supported in a non-contact manner) via a predetermined clearance (gap or void space) on an upper surface of a support member such as the base by air floating or magnetic levitation. When such a structure is employed, since the table moves without being in contact with the member supporting the table, this is extremely advantageous on positioning accuracy and greatly contributes to improve shaping accuracy. Note that table 12 may be movable only in directions of three degrees of freedom which are the X-axis, the Y-axis, and the Z-axis directions.

Note that the mechanism for moving table 12 does not have to be equipped with the slider which moves within the XY plane. For example, a movement system may be structured by a table and a robot which moves the table.

Measurement device 400 performs measurement of three-dimensional position information, e.g., shape, of a workpiece to correlate the position and the attitude of the workpiece mounted on table 12 with the table coordinate system. Measurement device 400, as is shown in FIG. 6, is equipped, for example, with a laser non-contact three-dimensional measuring instrument 401. Three-dimensional measuring instrument 401 is structured in a manner similar to a shape measurement apparatus disclosed in, for example, U.S. Patent Application Publication No. 2012/0105867.

With the measurement method using three-dimensional measuring instrument 401 according to the embodiment, for example, by using an optical cutting method, a linear projection pattern consisting of one line beam is projected on the surface of the test object, and each time the linear projection pattern is scanned over the entire test object surface, the linear projection pattern projected on the test object is to be imaged from an angle different from the projection direction. Then by a captured image of the test object surface which has been imaged, height of the test object surface from a reference plane is calculated using a principle of triangulation and the like for each pixel in the longitudinal direction of the linear projection pattern, and the three-dimensional shape of the test object surface is obtained. However, while scanning of the line beam with respect to the test object in directions parallel to the X, Y planes is performed by movement of a sensor section in the apparatus described in U.S. Patent Application Publication No. 2012/0105867, the embodiment differs on the point that the scanning is performed by movement of table 12. As a matter of course, the scanning described earlier may be performed by movement of the sensor section, or by movement of both the sensor section and table 12.

Measurement device 400 may be equipped with a mark detection system 56 (refer to FIG. 6) which optically detects an alignment mark, instead of three-dimensional measuring instrument 401 described above, or in addition with the three-dimensional measuring instrument described above. Mark detection system 56, for example, can detect an alignment mark formed on a workpiece. Controller 600 calculates position and attitude of the workpiece (or table 12) by accurately detecting each of the center positions (three-dimensional coordinates) of at least three alignment marks using mark detection system 56. Such mark detection system 56, for example, can be structured including a stereo camera. Mark detection system 56 may optically detect alignment marks which are formed in advance at a minimum of three places on table 12.

In the embodiment, controller 600 acquires the surface shape data by scanning the surface (target surface) of workpiece W in the manner described above, using three-dimensional measuring instrument 401. Then, controller 600 performs least squares processing using the surface shape data and correlates the three-dimensional position and attitude of the target surface on the workpiece with respect to the table coordinate system. Here, since the position in directions of six degrees of freedom of table 12 is controlled by controller 600 on the table coordinate system even during the measurement with respect to the test object (workpiece W) described above, control of position (that is, position and attitude) of workpiece W in directions of six degrees of freedom including the time of additive manufacturing by three-dimensional shaping can all be performed by the open loop control of table 12 according to the table coordinate system, after the three-dimensional position and attitude of the workpiece are correlated with the table coordinate system.

Note that the shaping system does not have to be equipped with measurement device 400.

As is shown in FIG. 2, shaping head section 500 is equipped with a beam irradiation section 520 including a light source system 510 and a condensing optical system 82 that emits beams LB₁ and LB₂ which pass through optical paths tilted with respect to an optical axis AX within a YZ plane via condensing optical system 82 (terminal lens 82a), a material supplying section 530 which supplies a powdered shaping material PD, a cover member 30 connected to a lower end of a barrel 85 which holds condensing optical system 82, and a gas supply apparatus 40 (refer to FIG. 6) which supplies inert gas such as, e.g., nitrogen (N₂), via a gas supply port to be described later on within a first space 30a inside cover member 30.

Light source system 510 is equipped with, for example, a light source unit 60 (not shown in FIG. 2, refer to FIG. 6) including a plurality of laser units, and an illuminance uniformizing optical system (not shown) equipped with a double fly-eye optical system, a condenser lens system, and the like, and beams emitted from each of a plurality of laser units are mixed using the illuminance uniformizing optical system to generate parallel beams whose cross sectional surface illuminance distribution is uniformized.

Note that the structure of the illuminance uniformizing optical system may be any structure. For example, the illuminance uniformizing optical system may be structured using a rod integrator, a collimator lens system or the like.

Light source unit 60 (a plurality of laser units) of light source system 510 is connected to controller 600 (refer to FIG. 6), and the on-off of the plurality of laser units is controlled individually by controller 600. This allows light amount (laser output) of the laser beam irradiated on (the target surface on) workpiece W from beam irradiation section 520 to be adjusted.

Note that shaping system 100 does not have to be equipped with the light source, or the light source and the illuminance uniformizing optical system. For example, a parallel beam having a desired light amount (energy) and an illuminance uniformity which is desired can be supplied from an external device to shaping system 100.

Other than light source system 510, as is shown in FIG. 2, beam irradiation section 520 has a beam cross sectional surface intensity conversion optical system 78, a mirror array 80 which is a kind of spatial light modulator (SLM: Spatial Light Modulator), and condensing optical system 82 which condenses light from mirror array 80, arranged sequentially on an optical path of the parallel beam from light source system 510. Here, the spatial light modulator is a collective term of elements which spatially modulate amplitude (intensity), phase, or state of polarization of light proceeding in a predetermined direction.

Beam cross sectional surface intensity conversion optical system 78 converts intensity distribution of the cross sectional surface of the parallel beam from light source system 510. In the embodiment, beam cross sectional surface intensity conversion optical system 78 converts the parallel beam from light source system 510 into a donut shaped (annular shaped) parallel beam whose intensity in the area including the center of the cross sectional surface is almost zero. Beam cross sectional surface intensity conversion optical system 78, in the embodiment, is structured, for example, by a convex conically shaped reflection mirror and a concave conically shaped reflection mirror which are arranged sequentially on the optical path of the parallel beam from light source system 510. The parallel beam from light source system 510 is radially reflected on a reflection surface of the convex conically shaped reflection mirror, and by the reflection beam being reflected on a reflection surface of the concave conically shaped reflection mirror, the beam is converted into an annular shaped parallel beam.

In the embodiment, the parallel beam which has passed through beam cross sectional surface intensity conversion optical system 78 is irradiated on the workpiece via mirror array 80 and condensing optical system 82 in the manner described later on. By converting the cross sectional surface intensity distribution of the parallel beam from light source system 510 using beam cross sectional surface intensity conversion optical system 78, intensity distribution of the beam incident on a pupil plane (entrance pupil) PP of condensing optical system 82 from mirror array 80 can be changed. Also, by converting the cross sectional surface intensity distribution of the parallel beam from light source system 510 using beam cross sectional surface intensity conversion optical system 78, intensity distribution in the exit surface of condensing optical system 82 of the beam emitted from condensing optical system 82 can be substantially changed.

Note that beam cross sectional surface intensity conversion optical system 78 is not limited to the combination of the convex conically shaped reflection mirror and the concave conically shaped reflection mirror, and may be structured using the combination disclosed in, for example, U.S. Patent Application Publication No. 2008/0030852, which uses a diffractive optical element, an afocal lens, and a conical axicon system. As long as beam cross sectional surface intensity conversion optical system 78 converts the cross sectional surface intensity distribution of the beam, various structures can be considered. Depending on the structure of beam cross sectional surface intensity conversion optical system 78, the parallel beam from light source system 510, intensity in the area including the center (optical axis of condensing optical system 82) of the cross sectional surface can be made to be not almost zero, but to be smaller than the intensity in an area on the outer side.

Mirror array 80, in the embodiment, has a base member 80A which has a surface (hereinafter called reference surface for convenience) making an angle of 45 degrees (π/4) with respect to the XY plane and an XZ plane, e.g., M (= P x Q) mirror elements 81ₚ, _{q} (p = 1 to P, q = 1 to Q) arranged, for example, in a P row Q column matrix on the reference surface of base member 80A, and a drive section 87 (not shown in FIG. 2, refer to FIG. 6) including M actuators (not shown) which individually move each mirror element 81ₚ, _{q}. Mirror array 80 can substantially form a large reflection surface parallel to the reference surface by adjusting the tilt with respect to the reference surface of multiple mirror elements 81ₚ, _{q} (for example, by making the reflection surface of all mirror elements 81ₚ, _{q} parallel to the reference surface).

The reflection surface of each mirror elements 81_{p,q} of mirror array 80 is, for example, a rectangular shape. Each mirror element 81ₚ, _{q} of mirror array 80 is structured, for example, rotatable around a rotation axis parallel to one of the diagonal lines of the reflection surface of each mirror element 81_{p, q}, and the tilt angle with respect to the reference surface of the reflection surface can be set to an arbitrary angle within a predetermined angle range. The angle of the reflection surface of each mirror element is measured by a sensor which detects the rotation angle of the rotation axis, such as, for example, a rotary encoder 83_{p, q} (not shown in FIG. 2, refer to FIG. 6).

Drive section 87, for example, includes an electromagnet or a voice coil motor as an actuator, and the individual mirror elements 81_{p, q} are moved by the actuator and operate at a high response.

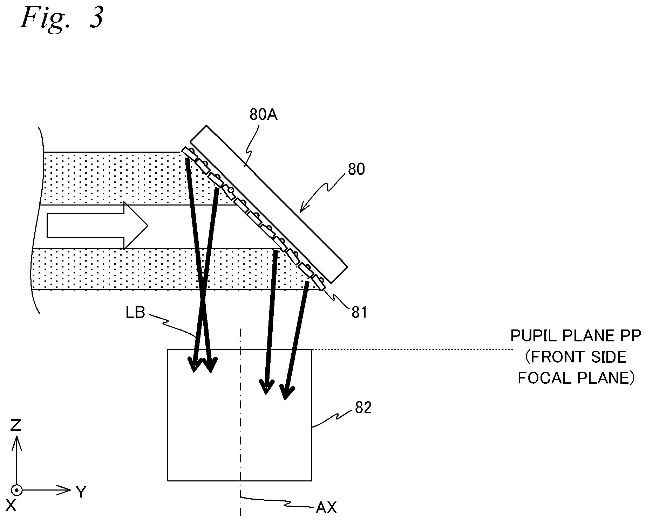

Of the plurality of mirror elements which structures mirror array 80, each mirror element 81_{p, q} illuminated by the annular shaped parallel beam of light source system 510 emits a reflection beam (parallel beam) in a direction which corresponds to a tilt angle of the reflection surface and makes the beam enter condensing optical system 82 (refer to FIG. 3). Note that in the embodiment, the cross sectional surface shape (cross sectional surface intensity distribution) of the parallel beam incident on mirror array 80 may be a shape different from the annular shape. For example, a beam may be irradiated only on a part of the annular shaped area (e.g., a first part on one side of optical axis AX and a second part on the other side) in the periphery of optical axis AX on pupil plane PP of condensing optical system 82. Also, beam cross sectional surface intensity conversion optical system 78 does not have to be provided.

Condensing optical system 82 is an optical system of high N.A. with an N.A. of, for example, 0.5 or more, preferably 0.6, and of low aberration. Condensing optical system 82, as is shown in FIG. 2, is structured by one or a plurality of large-diameter lenses (showing terminal lens 82a representatively in FIG. 2 and the like) which includes terminal lens 82a held by barrel 85 having a cylindrical shape . In the embodiment, as terminal lens 82a, a lens (called a hollow lens for convenience) is used which has a hollow section TH penetrating in optical axis AX direction in the center section including optical axis AX. In the case condensing optical system 82 has a plurality of lenses; lenses other than terminal lens 82a may, or may not be hollow lenses. Since condensing optical system 82 has a large diameter, low aberration, and high N.A., the plurality of parallel beams from mirror array 80 can be condensed on a rear side focal plane. Beam irradiation section 520 can condense the beam emitted from condensing optical system 82 (a terminal lens 82a), for example, in a spot shape. Also, since condensing optical system 82 is structured by one or a plurality of large-diameter lenses, the size of the area on the incident plane can be increased, which allows more amount of light energy to be taken in than in the case of using a condensing optical system that has a small N.A.. Accordingly, the beam condensed by condensing optical system 82 according to the embodiment is to have an extremely sharp and high energy density, which makes it possible to increase the processing accuracy of additive manufacturing.

In the embodiment, a case will be described in which shaping (processing) is performed while relatively scanning the beam and workpiece W which has shaping target surface TAS at the upper end in a scanning direction (scan direction) by moving table 12 in a scanning direction (the Y-axis direction, as an example in FIG 2) parallel to the XY plane, as it will be described later on. Note that on shaping, it is needless to say that table 12 may be moved in at least one direction of the X-axis direction, the Z-axis direction, the θx direction, the θy direction, and the θz direction, while table 12 is moving in the Y-axis direction. Also, in the embodiment, as it will be described later on, a powdered shaping material (metal material) supplied by material supplying section 530 is to be melted by the energy of the laser beam. Accordingly, as is described earlier, if the total amount of energy that condensing optical system 82 takes in increases, the energy of the beam emitted from condensing optical system 82 becomes larger which increases the amount of metal that can be melted per unit time. This improves shaping throughput, if supply amount of the shaping material and the speed of table 12 is increased.

With shaping system 100 according to the embodiment, shaping target surface TAS is positioned on a predetermined plane (hereinafter called a shaping plane MP (refer to, e.g., FIGS 2 and 5). With shaping system 100, shaping (processing) can be performed, for example, by forming a spot shaped irradiation area (beam spot) of the beam on shaping plane MP, and relatively scanning workpiece W (target surface TAS) with respect to the beam (spot beam) which forms the beam spot.

Note that in the embodiment, while shaping plane MP described above is the rear side focal plane (e.g., refer to FIGS. 2 and 5) of condensing optical system 82, the shaping plane may be a plane in the vicinity of the rear side focal plane. Also, in the embodiment, while shaping plane MP is perpendicular to optical axis AX on the exit side of condensing optical system 62, the plane does not have to be perpendicular.

As the method (such as the method of forming a beam spot as is described above) of setting or changing intensity distribution of the beam on shaping plane MP, a method can be employed, for example, of controlling an incidence angle distribution of the plurality of parallel beams incident on condensing optical system 82.

Note that while condensing position of the plurality of parallel beams LB can be controlled accurately and easily by changing the incidence angle of the plurality of parallel beams LB using mirror array 80 since condensing optical system 82 of the embodiment has a structure in which the pupil plane (entrance pupil) PP coincides with the front side focal plane, the system does not have to employ the structure in which the pupil plane (entrance pupil) of condensing optical system 82 coincides with the front side focal plane.

In the embodiment, incidence angle of each of the plurality of parallel beams LB which enters pupil plane PP of condensing optical system 82 is controlled by employing mirror array 80 and by controller 600 making each mirror elements 81ₚ, _{q} operate at an extremely high response. This allows the intensity distribution of the beam on shaping plane MP to be set or changed. In this case, controller 600 can change the intensity distribution of the beam on shaping plane MP, such as, for example, at least one of shape, size, and number of the irradiation area of the beam, during relative movement of the beam and target surface TAS (a surface on which target portion TA of shaping is set; a surface on workpiece W in the embodiment) . In this case, controller 600 can change the intensity distribution of the beam on shaping plane MP continuously, or intermittently. Controller 600 can also change the intensity distribution of the beam on shaping plane MP, depending on the relative position between the beam and target surface TAS. Controller 600 can also change the intensity distribution of the beam on shaping plane MP, depending on the required shaping accuracy and throughput.

Also, in the embodiment, the tilt angle of the reflection surface of each mirror element of mirror array 80 can be accurately controlled, since controller 600 detects the state of each mirror element (here, tilt angle of the reflection surface) using rotary encoder 83_{p, q} described earlier, which allows the state of each mirror element to be monitored real time.

Note that if the shape and size of the irradiation area formed on the shaping plane are not variable, the position of the irradiation area can be changed by controlling the incidence angle of one parallel beam incident on pupil plane of condensing optical system 82 using a solid mirror of a desired shape, instead of using mirror array 80.

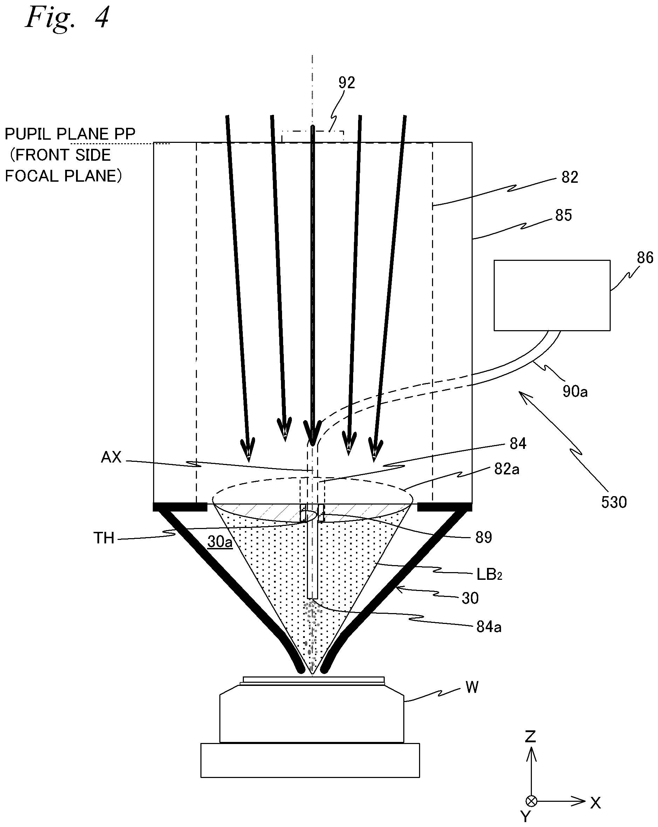

FIG. 4 shows condensing optical system 82 (barrel 85) in FIG. 2 and the part below, when viewed from the -Y direction. Also, FIG. 5 shows barrel 85 in FIG. 2 and the part below enlarged, along with a neighboring area of target portion TA on workpiece W. Material supplying section 530, as is shown in FIG. 4, has a supply pipe 84 extending in the Z-axis direction arranged along optical axis AX within hollow section TH of terminal lens 82a of condensing optical system 82, and a material supplying apparatus 86 connected to one end (upper end) of supply pipe 84 via a piping 90a. At the other end (lower end) of supply pipe 84, a material supplying port 84a is formed, and material supplying port 84a is arranged within the first space 30a inside cover member 30.

Supply pipe 84, as is shown in FIG. 4, is arranged within the hollow section of terminal lens 82a, and the gap between the outer periphery surface of supply pipe 84 and the inner surface of hollow section TH of terminal lens 82a is sealed with a seal member 89. Therefore, as is shown in FIG. 5, the first space 30a within cover member 30 below terminal lens 82a is separated from a space (a second space) 85a within barrel 85 above terminal lens 82a, which blocks the flow of gas from the first space 30a to the second space 85a.

Cover member 30, as is shown enlarged in FIG. 5, consists of a hollow conical member (a plate member of almost an even thickness having a conical surface on the outer surface and the inner surface), and at the bottom surface (upper side in FIG. 5), an attachment section 31 is provided which is annular in a planar view. Attachment section 31 consists of a large annular plate member that has an inner diameter smaller than the bottom surface of cover member 30 (slightly larger than the outer diameter of terminal lens 82a) and an outer diameter slightly larger than the bottom surface of cover member 30. Cover member 30 is fixed to the lower end surface of barrel 85 via attachment section 31. That is, cover member 30 is suspended and supported by barrel 85. At the tip portion of cover member 30 (the lower end part in FIG. 5), an outlet 30b of beams (LB₁, LB₂) irradiated on target surface TAS is formed at the tip. Note that the outer surface of cover member 30 does not have to be a conical surface, and does not have to be a plate member having an even thickness.

Referring back to FIG. 4, material supplying apparatus 86 has a cartridge inside in which shaping material PD is housed, and supplies shaping material PD within the cartridge on the target surface along optical axis AX, for example, by making the material fall freely from material supplying port 84a toward outlet 30b via piping 90a and supply pipe 84, or by making the material fall by pushing the material out at a predetermined pressure. In the case of making shaping material PD fall freely in this manner, normally the shaping material diffuses the further the material falls (as the material approaches the tip of cover member 30), and when the distance from the lower end of supply pipe 84 to target surface TAS is a predetermined distance or more, the shaping material diffuses to an area larger than outlet 30b. This will make fine shaping on the target surface difficult, even if shaping material PD is melted with beams LB₁ and LB₂.

Therefore, in the embodiment, gas supply apparatus 40 (refer to FIG. 6) described earlier is provided that supplies nitrogen N₂ which is a type of inert gas to the inner space (the first space) 30a of cover member 30, so that a spiral swirling flow shown by code SF in FIG. 5 is generated along the conical inner surface 30c using the conical shape of an inner surface 30c of cover member 30. Note that instead of nitrogen, gas supply apparatus 40 may supply rare gas (e.g., helium, neon, argon or the like) which is a kind of inert gas, a mixed gas of nitrogen and at least one kind of rare gas, or a mixed gas of a plurality of kinds of rare gas into the first space 30a.

Near the upper end of cover member 30, an opening 30d is formed to connect a gas supply pipe 42 shown in FIG. 5. One end of gas supply pipe 42 is connected to opening 30d. To describe this further in detail, one end of gas supply pipe 42 is inserted into opening 30d formed in cover member 30 from the outer side so that the one end intersects the wall of cover member 30 at an acute angle in a planar view (when viewed from above), for example, in a tangential direction of the periphery wall of cover member 30, and the tip of a gas supply port 42a of gas supply pipe 42 is exposed within the first space 30a inside cover member 30. In this case, gas supply port 42a is positioned at a part above the center in the height direction of cover member 30. Also, gas supply port 42a is positioned at a position higher than that of material supplying port 84a.

Also, one end of gas supply pipe 42 is slightly tilted with respect to the XY plane, so that the one end is lower than the other end in a state inserted into opening 30d. That is, opening 30d described above is formed in cover member 30 intersecting with the periphery wall of cover member 30 at an acute angle in a planar view and in a direction slightly tilted with respect to the XY plane.

The other end of gas supply pipe 42 is connected to gas supply apparatus 40 (refer to FIG. 6). Therefore, in an operating state of gas supply apparatus 40, nitrogen N₂ (inert gas) is sent into the first space 30a substantially along the conical inner surface 30c of cover member 30, for example, substantially along the tangential direction of inner surface 30c of cover member 30, via gas supply port 42a of gas supply pipe 42 and nitrogen N₂ which has been sent flows toward outlet 30b of cover member 30 in a spiral swirling flow (swirling flow due to circulation) around optical axis AX along inner surface 30c of cover member 30 as is shown in code SF in FIG. 5, and flows outside the first space 30a from outlet 30b. With swirling flow SF in this case, since flow speed becomes faster when the flow approaches the center, static pressure becomes lower when the flow approaches the center according to the Bernoulli's theory (except for the near pole area in the center where viscous influence becomes strong) . Also, the diameter of inner surface 30c of cover member 30 becomes smaller towards the bottom (when approaching outlet 30b of cover member 30) . Accordingly, cover member 30 functions as a convergence nozzle (convergent nozzle) which accelerates fluid, and the flow speed of gas flowing inside cover member 30 increases when the gas approaches the narrow part (tip of cover member 30) while the pressure decreases. Accordingly, static pressure in swirling flow SF is lowest at the center of the position of outlet 30b of cover member 30. Therefore, powdered shaping material PD which drops directly below from supply pipe 84 is narrowed corresponding to the shape of inner surface 30c of cover member 30 towards the bottom (when approaching outlet 30b of cover member 30) by the swirling flow of nitrogen N₂ (inert gas). Accordingly, in the operating state of gas supply apparatus 40, powdered shaping material PD supplied from supply pipe 84 can be converged to almost one point (here, a point on optical axis AX), and by melting shaping material PD with beams LB₁ and LB₂, a three-dimensional shaped object can be made with excellent shaping accuracy and high resolution secured. Gas supply apparatus 40 according to the embodiment can adjust the temperature, flow speed and the like of the inert gas sent into the first space 30a.

Note that opening 30d provided in cover member 30 may serve as a gas supply port. In this case, the tip of gas supply pipe 42 may be connected to opening 30d of cover member 30 so that the tip is not exposed to the first space 30a.

Also, gas supply port 42a (opening 30d) may be arranged lower than the center in the height direction of cover member 30. Also, gas supply port 42a (opening 30d) may be arranged lower than material supplying port 84a.

Note that as is obvious from the description above, in the embodiment, since the irradiation area of the beams on shaping plane MP is formed by beams LB₁ and LB₂ emitted via outlet 30b, the range in which shape, size, or position can be changed of the irradiation area formed on the shaping plane is limited by the shape and size of outlet 30b.

Also, in the embodiment, as is obvious in FIG. 5, since gas supply port 42a is provided at a height position almost the same as that of the lower surface of terminal lens 82a, the lower surface of terminal lens 82a is purged of gas due to a high speed inert gas flow, which allows terminal lens 82a to be protected from contamination (including adhesion of shaping material from material supplying port 84a). In addition, since terminal lens 82a is physically protected by cover member 30, the terminal lens is protected from contamination by contaminants in the atmosphere outside cover member 30.

Although the description is out of sequence, material supplying apparatus 86 will now be described. Material supplying apparatus 86, for example, has two powder cartridges, and each of the two powder cartridges contains powder of a first shaping material (e.g., titanium) and powder of a second shaping material (e.g., stainless steel). Note that in the embodiment, while material supplying apparatus 86 is equipped with two powder cartridges for supplying two kinds of shaping materials, the number of powder cartridges material supplying apparatus 86 is to be equipped with may be one.

In the embodiment, material supplying apparatus 86 is connected to controller 600 (refer to FIG. 6), and at the time of shaping, material supplying apparatus 86 (an internal control unit) selects one of the two powder cartridges according to instructions from controller 600, and shaping material from the selected powder cartridge is supplied to supply pipe 84 via piping 90a. Note that by changing the structure of material supplying apparatus 86, a structure may be employed in which a mixture of the first shaping material from one of the powder cartridges and the second shaping material from the other powder cartridge can be supplied to supply pipe 84 via piping 90a when necessary.

Controller 600 can adjust the supply amount per unit time of the shaping material supplied to supply pipe 84 from the powder cartridge selected by material supplying apparatus 86. Adjustment of the supply amount per unit time of the shaping material supplied to supply pipe 84 may be performed, such as by generating negative pressure outside the powder cartridge with respect to the inside when acquiring powder from the powder cartridge, by adjusting the level of negative pressure, or by providing a valve for adjusting the amount of powder supplied to piping 90a from material supplying apparatus 86 and adjusting the degree of opening of the valve.

In the embodiment, since an annular shaped parallel beam irradiates mirror array 80, a reflection beam from mirror array 80 is incident on a partial area (a partial area where the N.A. is large) near the periphery edge of condensing optical system 82, and the beam is condensed (refer to FIG. 2) on shaping plane MP (coincides with the rear side focal plane of condensing optical system 82 in the embodiment) of condensing optical system 82, via the emitting end of condensing optical system 82, that is, an area in the periphery apart from optical axis AX of terminal lens 82a positioned at the emitting end of beam irradiation section 520. That is, only light that passes near the periphery of the same condensing optical system 82 forms, for example, a beam spot. Therefore, a beam spot with high quality can be formed than when forming a beam spot (laser spot) by condensing light via separate optical systems on the same area. Also, in the embodiment, irradiation of the beam on supply pipe 84 arranged within hollow section TH of terminal lens 82a of condensing optical system 82 and on piping 90a which has one end connected to the upper end of supply pipe 84 can be limited. Therefore, in the embodiment, all the reflection beams from mirror array 80 can be used to form spots, and a light shielding member or the like which is provided to limit irradiation of the beams on supply pipe 84 in the part corresponding to supply pipe 84 on the incidence plane side of condensing optical system 82 will no longer be necessary. For this reason, mirror array 80 is to be illuminated with annular shaped parallel beams.

Note that to limit the beams incident on supply pipe 84 from condensing optical system 82, for example, a limit member 92 shown in a two-dot chain line in FIG. 4 may be provided at the incidence plane side (e.g., pupil plane PP) of condensing optical system 82. Limit member 92 limits incidence on supply pipe 84 of the beam from condensing optical system 82. As limit member 92, while a light shielding member may be used, a light shielding filter or the like may also be used. In this case, the parallel beams incident on condensing optical system 82 may be a parallel beam having a circular cross sectional surface, or may be an annular shaped parallel beam. In the latter case, since the beams are not irradiated on limit member 92, the reflection beams from mirror array 80 can all be used to form spots.

In the embodiment, at the time of additive manufacturing and the like to the workpiece, as is shown in FIGS. 2 and 5, the beams (indicated as beams LB1₁ and LB1₂ in FIGS. 2 and 5 for convenience) that pass through near the periphery of condensing optical system 82 (terminal lens 82a) and pass the optical path on the +Y side and the -Y side (the front and rear of the scanning direction of workpiece W (table 12)) of supply pipe 84 are condensed directly below supply pipe 84 and a beam spot is formed on the shaping plane, and powdered shaping material PD is supplied to a spot beam which forms the beam spot, through outlet 30b of cover member 30 along optical axis AX, via supply pipe 84. According to this, weld pool WP is formed directly below supply pipe 84. And, this formation of weld pool WP is performed while table 12 is scanned in the scanning direction (+Y direction in FIG. 5) . This makes it possible to form a bead (melted and solidified metal) BE of a predetermined length with a predetermined width (width of beam spot). Note that beams LB1₁ and LB1₂ shown in FIG. 5 may be separate parallel beams that are incident on pupil plane PP of condensing optical system 82 at different incidence angles each reflected by different mirror elements 81_{p,q} of mirror array 80, or may be the same parallel beam, such as for example, a part of a parallel beam having an annular sectional shape.

In the case of making the plurality of parallel beams enter pupil plane PP of condensing optical system 82, , for example, when the incidence angle of the plurality of parallel beams LB incident on condensing optical system 82 is adjusted so that the number of parallel beams LB incident on condensing optical system 82 are not reduced while the width in the X-axis direction or the Y-axis direction or both of the straight line beam are gradually narrowed, condensing density (energy density) of the beam increases. Accordingly, in response, by increasing the supply amount of the powder (shaping material) per unit time and increasing the scanning speed of target surface TAS, it becomes possible to keep the thickness of bead BE to be formed constant, and also to keep the level of throughput high. However, the adjustment method is not limited as such, and other adjustment methods can also be used to keep the thickness of bead BE to be formed constant. For example, laser output (energy amount of the laser beam) of at least one of the plurality of laser units may be adjusted according to the width of the beam in the X-axis direction, the width in the Y-axis direction, or the width in both the X-axis direction and the Y-axis direction, or the number of parallel beams LB incident on condensing optical system 82 from mirror array 80 may be changed. In this case, the adjustment is simple although the throughput slightly decreases when compared to the adjustment method described above.

FIG. 6 shows a block diagram that indicates an input/output relation of controller 600 which mainly structures a control system of shaping system 100. Controller 600 includes a workstation (or a microcomputer) and the like and has overall control over constituent parts of shaping system 100.

The basic function of shaping system 100 according to the embodiment structured in the manner described above is to add a desired shape by three-dimensional shaping to an existing component (workpiece) . The workpiece is supplied to shaping system 100 and then is carried out from shaping system 100 after a desired shape is accurately added. At this point, the actual shaping data of the shape that has been added is sent to an external device from controller 600, such as a host device. The series of operations performed in shaping system 100 is roughly in the manner described below.

First, when table 12 is at a predetermined loading/unloading position, the workpiece is loaded on table 12 by workpiece carrier system 300. At this time, table 12 is in a reference state (Z, θx, θy, θz) = (Z₀, 0, 0, 0), and the XY position of table 12 coincides with the X, Y positions of the slider of drive mechanism 11 measured by position measurement system 28.

Next, controller 600 moves table 12 on which workpiece W is loaded to an area below measurement device 400. The movement of table 12 is performed by controller 600 controlling planar motor 26 based on the measurement information of position measurement system 28 so that the slider is driven in the X-axis direction (and the Y-axis direction) on the floor surface (or the base) . Table 12 maintains the reference state previously described also during this movement.

Next, controller 600 performs measurement of position information within a three-dimensional space (shape information in the embodiment) which is at least a part of target surface TAS on workpiece W that is on table 12 in a reference state, using measurement device 400. Hereinafter, it becomes possible to control the position in directions of 6-DOF of target surface TAS on workpiece W on the table coordinate system (reference coordinate system) according to open loop control, based on the measurement results.

Next, controller 600 moves table 12, on which workpiece W having completed measurement of shape information of at least a part of target surface TAS is mounted, to an area below shaping head section 500 (cover member 30).

Next, additive manufacturing according to three-dimensional shaping is performed in which the shape corresponding to 3D data is added to the workpiece on table 12. This additive manufacturing, for example, is performed as follows.

That is, controller 600 converts the three-dimensional CAD data of the shape to be added by additive manufacturing (shape in which the shape of the workpiece subject to additive manufacturing is removed from the shape of the object made after additive manufacturing has been applied) to, e.g. STL (Stereo Lithography) data, as three-dimensional shaping data, and then furthermore generates data for each layer sliced in the Z-axis direction from this three-dimensional STL data. Then, controller 600 controls movable apparatus 200 and shaping head section 500 so that additive manufacturing is performed on each layer of the workpiece based on the data of each layer, and repeatedly performs formation of the beam spot described earlier and formation of weld pool WP by supplying shaping material PD from supply pipe 84 to the spot beam while scanning table 12 in the scanning direction, for each layer. Here, position and attitude control of the target surface on the workpiece at the time of additive manufacturing is performed taking into consideration the shape information on the target surface measured earlier.

Here, in the description above, shaping accompanied with scanning operation of table 12 is to be performed, presupposing that target surface (e.g., upper surface) TAS on which target portion TA of additive manufacturing of workpiece W is set should be a plane set as a plane (a plane parallel to the XY plane) perpendicular to the optical axis of condensing optical system 82, by adjusting the tilt of table 12.

After the additive manufacturing to workpiece W has been completed, controller 600 moves table 12 on which workpiece W that has undergone additive manufacturing is loaded to the loading/unloading position previously described.

Next, controller 600 gives instructions to workpiece carrier system 300 to unload the workpiece. In response to the instructions, workpiece carrier system 300 takes workpiece W that has undergone additive manufacturing from table 12 and carries the workpiece outside of shaping system 100. Then, controller 600 sets table 12 of movable apparatus 200 to a reference state. In this manner, movable apparatus 200 is to wait at the loading/unloading position in preparation for delivery of the next workpiece.

As is described in detail so far, with shaping system 100 according to the embodiment, shaping (processing) can be performed by forming an irradiation area (beam spot) of the spot shaped beam on shaping plane MP (for example, refer to FIGS. 2 and 5) where target surface TAS of shaping should be positioned, and relatively scanning workpiece W with respect to a beam (spot beam) which forms the beam spot. With shaping system 100, on shaping, table 12 can also be moved in at least one direction of the X-axis direction, the Z-axis direction, the θx direction, the θy direction, and the θz direction while table 12 is moving in the Y-axis direction.

Also, with shaping system 100, powdered shaping material (metal material) PD supplied by material supplying section 530 is melted by the energy of the laser beam. With shaping system 100, on shaping, gas supply apparatus 40 operates under the control of controller 600, nitrogen (inert gas) is sent into cover member 30 via gas supply port 42a of gas supply pipe 42, so that a spiral swirling flow (refer to code SF in FIG. 5) is generated along inner surface 30c of cover member 30. By this swirling flow of nitrogen (inert gas), powdered shaping material PD supplied by a natural drop directly downward from supply pipe 84 is narrowed corresponding to the shape of inner surface 30c (inner periphery wall) of cover member 30 towards the bottom (when approaching the tip of cover member 30). This allows powdered shaping material PD supplied from supply pipe 84 to be converged to almost one point (here, a point on optical axis AX), and by melting shaping material PD with beams LB₁ and LB₂, a three-dimensional shaped object can be made with excellent shaping accuracy and high resolution secured.

Also, with shaping head section 500 according to the embodiment, the lower surface of terminal lens 82a can be purged of gas due to a high speed inert gas flow, which allows terminal lens 82a to be protected from contamination. In addition, since terminal lens 82a is physically protected by cover member 30, the terminal lens is protected from contamination by contaminants in the atmosphere outside cover member 30. This can prevent degradation in shaping accuracy.

Also, with shaping head section 500 according to the embodiment, since condensing optical system 82 is structured by one or a plurality of large-diameter lenses, the size of the area on the incident plane can be increased, which allows more amount of light energy to be taken in than in the case of using a condensing optical system that has a small N.A. Accordingly, the beam condensed by condensing optical system 82 according to the embodiment is to have an extremely sharp and high energy density, which can increase processing accuracy by shaping. Also, when the total amount of energy that condensing optical system 82 takes in increases, the energy of the beam emitted from condensing optical system 82 becomes larger, and this leads to the amount of metal that can be melted per unit time being increased. This improves throughput of shaping processing by shaping head section 500, if supply amount of the shaping material and the speed of table 12 is increased.

Also, with shaping head section 500 according to the embodiment, the intensity distribution of the beam on shaping plane MP can be set or changed, for example, by controlling incidence angle distribution of a plurality of parallel beams incident on condensing optical system 82.

Accordingly, with shaping system 100 according to the embodiment, it becomes possible to form a shaped object on target surface TAS of workpiece W, for example, by rapid prototyping, with high processing accuracy and high throughput.

Also, shaping system 100 according to the embodiment, for example, has two powder cartridges, and each of the two powder cartridges contains powder of a first shaping material (e.g., titanium) and powder of a second shaping material (e.g., stainless steel) . Then, at the time of additive manufacturing (at the time of shaping), controller 600 performs switching of powder supply to supply pipe 84 using material supplying apparatus 86. This allows powder of the first shaping material (e.g., titanium) and powder of the second shaping material (e.g., stainless steel) to be selectively supplied to supply pipe 84. Accordingly, a joint shape of different materials can be generated easily, only by switching the powder material supplied by controller 600 depending on the portion. Also, the switching can be performed almost in an instant. By further mixing and supplying different materials, an "alloy" can be made instantaneously, or the composition can be changed depending on places or can be gradationed.

Note that in the embodiment above, while the space (first space 30a) within cover member 30 below terminal lens 82a and the space (second space 85a) inside barrel 85 above terminal lens 82a are separated by sealing the gap between outer periphery surface of supply pipe 84 arranged within hollow section TH of terminal lens 82a and the inner surface of hollow section TH with seal member 89, instead of this, or in addition to this, pressure within the second space 85a may be set to a pressure positive than that of the inside of the first space 30a. In this case, while both spaces may be separated at a level in which the pressure difference between the first space 30a and the second space 85a can be maintained, gas (such as inert gas or the like) may constantly blow out from the second space 85a towards the first space 30a. In this case as well, the gas is kept from flowing into the second space from the first space.

Note that in the embodiment above, while the inert gas is to be supplied downward from the horizontal line into cover member 30 (first space 30a) from gas supply pipe 42 via gas supply port 42a, the embodiment is not limited to this, and the inert gas may be supplied into cover member 30 in a horizontal direction via gas supply port 42a.

Also, a plurality of openings may be formed in cover member 30, and gas supply pipe 42 may be connected individually to each of the openings. In this case, the plurality of openings may be formed, for example, so that each of the gas supply pipes 42 can be connected at positions where the center angle become an equal angle interval on the circular bottom surface (a surface on the upper side in FIG. 5) of cover member 30. In this case, by supplying nitrogen N₂ in the tangential direction of inner surface 30c of cover member 30 from gas supply port 42a of each of the plurality of gas supply pipes 42, a swirling flow may be generated that swirls in the same direction (clockwise or counter-clockwise).

Also, in the case a plurality of openings are formed in cover member 30 and gas supply pipe 42 is to be connected individually to each of the openings, position (position in the height direction) in the optical axis AX direction (the Z-axis direction) of gas supply port 42a of at least one gas supply pipe 42 may be different from at least one of the remaining gas supply ports. In this case, the inert gas supplied from gas supply port 42a of at least one gas supply pipe 42 may be different in temperature and flow speed from the inert gas supplied from the at least one of the remaining gas supply ports, or the constituent or the kind of the inert gas may be different. Constituent of the inert gas being different refers to a case in which when the inert gas is, for example, a mixed gas of a plurality of kinds of rare gases, the constituent gases should be different from one another. As a matter of course, the inert gas may be a mixed gas of nitrogen and rare gas.

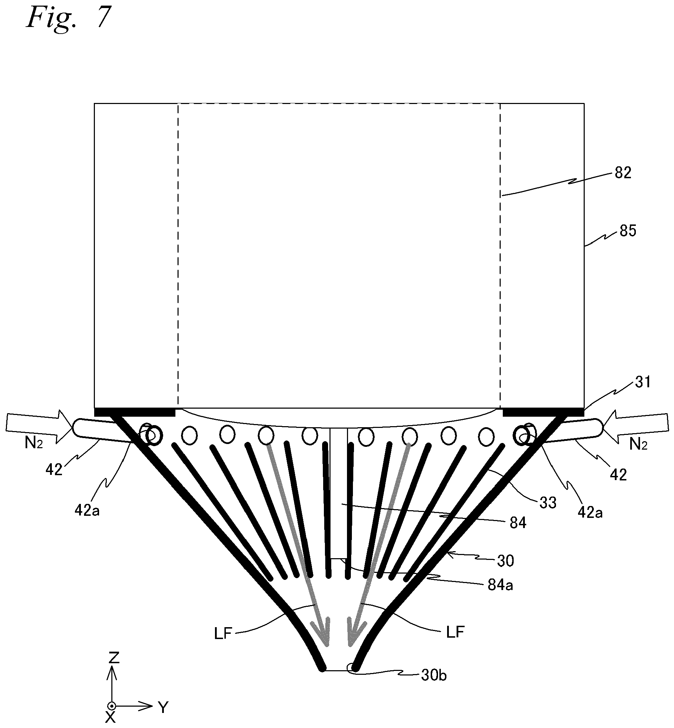

Also, in the embodiment above, the case has been described in which a spiral swirling flow (a swirling flow due to circulation) SF is generated along inner surface 30c of cover member 30 by supplying an inert gas into the first space 30a along a tangential direction of the conical inner surface 30c of cover member 30, and by using the points that static pressure becomes lower when the flow nears the center and that the diameter of inner surface 30c narrows gradually towards the outlet 30b side, shaping material PD supplied from material supplying port 84a along optical axis AX toward outlet 30b is converged on the optical axis. However, the embodiment is not limited to this, and as is shown in FIG. 7, for example, by providing a plurality of gas supply ports 42a covering almost the entire circumference of cover member 30 at an almost equal spacing and supplying inert gas from each of the plurality of gas supply ports 42a, a flow LF of inert gas which flows from the upper side to the lower side along inner surface 30c of cover member 30 that gradually converges from one end (the upper end) side to the other end (the lower end) side may be generated in a plurality of numbers covering almost the entire periphery of the optical axis at an almost equal spacing, and by the plurality of inert gas flows LF, shaping material PD supplied from material supplying port 84a along optical axis AX toward outlet 30b may be converged on the optical axis. Note that while FIG. 7 only shows two of flows LF for reasons such as for convenience of illustration, flow LF may be generated corresponding to each of the plurality of gas supply ports 42a. In this case, since the flow of inert gas passes through the entire cross sectional surface of the opening near outlet 30b, and the flow speed increases (static pressure decreases) when the flow approaches the center, it becomes possible to converge shaping material PD on the optical axis. In this case, a plurality of guide sections 33 may be provided on inner surface 30c of cover member 30, as is shown in FIG. 7. The embodiment is not limited to this, and as the guide section, for example, an uneven section in which a spiral guide groove similar to swirling flow SF described earlier is formed may be formed on inner surface 30c of the cover member.

Other than this, a structure may be employed in which the part attached to cover member 30 at one end of gas supply pipe 42 can be tilted with respect to the XY plane.

Note that in the embodiment above, while an example was given of the case when cover member 30 is a hollow conical member, that is, a hood-like member, the outer shape of the cover member may be any shape as long as the shape is a member that has a shape including a curved surface in a part of the shape converged toward the outlet 30b side from a side opposite to outlet 30b in the Z-axis direction (a direction parallel to optical axis AX), such as for example, a member having a conical or an elliptical cone shaped inner surface.

Also, in the embodiment above, while the case has been described in which shaping head section 500 has condensing optical system 82, and a hollow lens which has a through hole formed including optical axis AX is used as terminal lens 82a of condensing optical system 82, the embodiment is not limited to this, and the terminal optical element of the condensing optical system may be a normal lens which does not have a through hole, or may be an element other than a lens, such as a mirror or the like. Also, shaping head section 500 does not have to have a condensing optical system. In the case the shaping head section does not have a condensing optical system, a beam may be emitted, which passes an optical path tilted with respect to an axis (a vertical axis) along a supply path of the shaping material from the supply pipe, from the beam irradiation section.

Note that while the case has been described in the embodiment described above and the modified example in FIG. 7 in which gas supply pipe 42 is connected to the periphery wall of cover member 30 from the outside, the embodiment is not limited to this, and gas supply pipe 42 may be inserted into the first space 30a without passing through cover member 30.

Also, in the embodiment above, while an example was given of the case where cover member 30 is attached to barrel 85 via attachment section 31 (the case where cover member 30 is suspended and supported by barrel 85), a vibration isolation member (such as rubber) may be arranged between barrel 85 and cover member 30, or another member different from barrel 85 may support the cover member, in order to suppress vibration from traveling to each of the high N. A. optical elements including terminal lens 82a of condensing optical system 82 from cover member 30.

Also, cover member 30 may be movable with respect to barrel 85.

Note that in the embodiment above, while the case has been described of using mirror array 80 as the spatial light modulator, instead of this, a digital mirror device of a large area may be used, which is made by arranging multiple digital micromirror devices (Digital Micromirror Device: DMD (registered trademark)) made by MEMS technology in a matrix shape.

Note that in the embodiment above, while the case has been described where the intensity distribution of the beam on the shaping plane is changed by individually controlling the incidence angle of the plurality of parallel beams incident on the pupil plane of condensing optical system 82, not all incidence angles of the plurality of parallel beams incident on the pupil plane of condensing optical system 82 have to be controllable (changeable). Accordingly, in the case such as controlling the incidence angle of the parallel beam incident on condensing optical system 82 using the mirror array similar to the embodiment described above, the state of the reflection surface (at least one of position and tilt angle of the reflection surface) does not have to be variable in all mirror elements. Also, the reflection type spatial light modulator described above which can be used for controlling the incidence angle of the plurality of parallel beams incident on condensing optical system 82 is not limited to the mirror array described above. As a reflection type spatial light modulator which can be used, for example, a reflection type liquid crystal display device, an electrophoretic display (EPD: Electro Phonetic Display), electronic paper (or electronic ink), a diffraction type light valve (Grating Light Valve) and the like can be given.

Also, changing the intensity distribution of the beam on the shaping plane may be performed by changing the opening (size, shape, and number) of the mask arranged on the incidence plane side of the condensing optical system (projection optical system) . In this case, a mask may be arranged on the object plane of the condensing optical system, and an image plane or the vicinity may serve as the shaping plane. Also, in this case, the beam intensity distribution on the pupil plane of the condensing optical system, the terminal lens of the condensing optical system may be made into a hollow lens, for example, by changing the shape to an annular shape, or by arranging a light shielding member which shields light in a circular area including the optical axis on the pupil plane.

Also, as is described above, although it is desirable for condensing optical system 82 to have a large diameter, a condensing optical system having a numerical aperture N.A. smaller than 0.5 may also be used.

Also, in the embodiment above, shaping system 100 may be equipped with a sensor that can have the light receiving section arranged in or close to the rear focal plane of condensing optical system 82 to control the intensity distribution of the beam. For example, it is desirable that a CCD image sensor is loaded on table 12 and the CCD image sensor calibrates the intensity distribution (intensity distribution within the irradiation area in the shaping plane) of the beam at a proper frequency. As is described, by measuring the intensity distribution of the beam using the sensor that receives the beam from condensing optical system 82, the intensity distribution of the beam can be controlled considering variation factors such as thermal aberration of condensing optical system 82. Also, by controlling mirror array 80 based on the results, the intensity distribution of the beam in the rear side focal plane and the like of condensing optical system 82 can be set with good precision to a desired state. Also, this sensor may be used to control the position of the beam on the reference coordinate system.

Note that in the embodiment above, although examples were given of the case where titanium and stainless steel powder were used as shaping materials, not only iron powder or other metal powder as a matter of course, but also powder other than metal such as powdered nylon, polypropylene, ABS and the like can also be used.

Note that in shaping system 100 in the embodiment described above, cover member 30 may have a recovery port (suction port) for recovering powdered shaping material that has not been melted, along with outlet 30b which functions as an outlet of the beam, an outlet of the inert gas, and an outlet of the shaping material.

While the example was described so far of adding a shape to an existing workpiece, the usage of shaping system 100 equipped with shaping head section 500 according to the embodiment is not limited to this, and it is possible to generate a three-dimensional shape by shaping on table 12 where nothing exists similarly to an ordinary 3D printer. This case is none other than applying additive manufacturing to a workpiece called "nothing". When shaping the three-dimensional shaped object on such table 12, by optically detecting alignment marks at a minimum of three places formed in advance on table 12 with mark detection system 56 (refer to FIG. 6) that measurement device 400 is equipped with, controller 600 only has to acquire position information in directions of 6-DOF of the target surface of the shaping set on table 12 and perform three-dimensional shaping while controlling the position and attitude of the target surface on table 12 with respect to (the irradiation area of) the beam based on the results.

Note that in the embodiment above, although the case has been described as an example where controller 600 controls each constituent part; movable apparatus 200, measurement device 400, and shaping head section 500, the embodiment is not limited to this, and the controller of the shaping system may be structured by a plurality of hardware that each include a processing device such as a microprocessor. In this case, the movable apparatus 200, measurement device 400, and shaping head section 500 may each have a processing device, or the controller may be a combination of a first processing device that controls two of movable apparatus 200, measurement device 400, and shaping head section 500 and a second processing device that controls the remaining one system. In any case, the processing devices are each in charge of a part of the functions of controller 600 described above. Or the controller of the shaping system may be structured by a processing device such as a plurality of microprocessors and a host computer that has overall control over these processing devices.

Also, in each of the embodiments described above, while there are cases when the shape of the members, openings, and holes are described using terms such as circular and rectangular, it is needless to say that the shapes are not limited thereto.

Note that the disclosures of all publications of U.S. patent applications, U.S. Patents and the like cited in each of the embodiments above are incorporated herein by reference as a part of the present specification.

### INDUSTRIAL APPLICABILITY

As is described above, the shaping system and the shaping method according to the present invention are suitable for forming a three-dimensional shaped object.

### REFERENCE SIGNS LIST

30...cover member,
30a...first space,
30b...outlet,
30c...inner surface,
33...guide sections,
40...gas supply apparatus,
42a...gas supplying port,
82...condensing optical system,
82a...terminal lens,
84...supply pipe,
84a...material supplying port,
85...barrel,
85a...second space,
89...seal member,
100...shaping system,
200...movable apparatus,
520...beam irradiation section,
530...material supplying section,
600...controller,
AX...optical axis,
LB₁, LB₂...beams,
PD...shaping material,
SF...swirling flow,
TA...target portion,
TAS...target surface,
TH...through hole.

## Claims

1. A shaping system which forms a three-dimensional shaped object on a target surface using a beam, comprising:
a beam irradiation section that emits a beam which passes through an optical path tilted with respect to an axis;
a material supplying section which has a material supplying port and supplies along the axis powdered shaping material to be irradiated by a beam from the beam irradiation section;
a cover member which has an inner surface that converges gradually from a side at one end to a side at the other end and has an outlet formed in the side at the other end through which the beam from the beam irradiation section passes; and
a gas supply apparatus which supplies inert gas to a space inside the cover member via a gas supplying port, wherein
the inert gas flows outside the space via the outlet of the cover member, and
the shaping material is supplied outside the space via the outlet of the cover member.

2. The shaping system according to claim 1, wherein
the inert gas flows toward the outlet along the inner surface of the cover member in a swirling flow.

3. A shaping system which forms a three-dimensional shaped object on a target surface using a beam, comprising:
a beam irradiation section that emits a beam which passes through an optical path tilted with respect to an axis;
a material supplying section which has a material supplying port and supplies along the axis powdered shaping material to be irradiated by a beam from the beam irradiation section;
a cover member which has an inner surface arranged to surround at least a part of the optical path and has an outlet formed through which the beam from the beam irradiation section passes; and
a gas supply apparatus which supplies inert gas to a space inside the cover member via a gas supplying port, wherein
the inert gas flows toward the outlet along the inner surface of the cover member in a swirling flow,
the inert gas flows outside the space via the outlet of the cover member, and
the shaping material is supplied outside the space via the outlet of the cover member.

4. The shaping system according to one of claims 2 and 3, wherein
the inert gas flows toward the outlet in a swirling flow around the axis.

5. A shaping system which forms a three-dimensional shaped object on a target surface using a beam, comprising:
a beam irradiation section that emits a beam which passes through an optical path tilted with respect to an axis;
a material supplying section which has a material supplying port and supplies along the axis powdered shaping material to be irradiated by a beam from the beam irradiation section;
a cover member which has an inner surface arranged to surround at least a part of the optical path and has an outlet formed through which the beam from the beam irradiation section passes; and
a gas supply apparatus which supplies inert gas to a space inside the cover member via a gas supplying port, wherein
the inert gas flows toward the outlet in a swirling flow around the axis,
the inert gas flows outside the space via the outlet of the cover member, and
the shaping material is supplied outside the space via the outlet of the cover member.

6. The shaping system according to any one of claims 2 to 5, wherein
the inert gas is supplied from the gas supplying port so that the swirling flow is formed.

7. A shaping system which forms a three-dimensional shaped object on a target surface using a beam, comprising:
a beam irradiation section that emits a beam which passes through an optical path tilted with respect to an axis;
a material supplying section which has a material supplying port and supplies powder serving as a shaping material along the axis;
a cover member which has an outlet formed through which the beam from the beam irradiation section passes; and
a gas supply apparatus which supplies inert gas to a space inside the cover member via a gas supplying port, wherein
the inert gas flows outside the space via the outlet of the cover member, and
the shaping material is supplied on the target surface outside the space via the outlet of the cover member.

8. The shaping system according to any one of claims 1 to 7, wherein
the gas supplying port is positioned at a part higher than the center in a height direction of the cover member.

9. The shaping system according to any one of claims 1 to 8, wherein
the gas supply apparatus supplies the inert gas from the gas supplying port into the space substantially along the inner surface of the cover member.

10. The shaping system according to claim 9, wherein
the inner surface of the cover member includes a curved surface at least partially, and
the gas supply apparatus supplies the inert gas from the gas supplying port into the space substantially along a tangential direction of the curved surface.

11. The shaping system according to one of claims 9 and 10, wherein
the gas supply apparatus supplies the inert gas downward from the horizontal line into the space via the gas supplying port.

12. The shaping system according to any one of claims 1 to 11, wherein
the beam irradiation section has a condensing optical system.

13. The shaping system according to claim 12, wherein
the condensing optical system has a terminal lens that emits the beam which passes through the optical path tilted with respect to the axis, and
the axis is almost parallel to an optical axis of the terminal lens.

14. The shaping system according to claim 13, wherein
the gas supplying port is at almost the same position as an exit surface of the terminal lens in a direction of the axis.

15. The shaping system according to one of claims 13 and 14, wherein
a though hole is formed in the terminal lens so as to include the optical axis.

16. The shaping system according to claim 15, wherein
the material supplying section has a supply pipe of the shaping material arranged inside the through hole of the terminal lens.

17. The shaping system according to claim 16, wherein
a space between the supply pipe and the terminal lens is sealed with a seal member.

18. The shaping system according to any one of claims 13 to 17, wherein
the material supplying port is arranged between the outlet of the cover member and the terminal lens.

19. The shaping system according to any one of claims 13 to 18, wherein
the system has a holding member which holds the terminal lens, and space inside the holding member is set to a positive pressure with respect to the space inside the cover member.

20. The shaping system according to any one of claims 13 to 18, wherein
the system has a holding member which holds the terminal lens, and
the cover member is held by the holding member.

21. The shaping system according to any one of claims 1 to 20, wherein
the material supplying port is arranged on the axis.

22. The shaping system according to claim 21, wherein
the outlet of the cover member is arranged on the axis, and
the shaping material supplied from the material supplying port flows toward the outlet along the axis.

23. The shaping system according to any one of claims 1 to 22, wherein
in the direction of the axis, the gas supplying port is arranged at a position different from the material supplying port.

24. The shaping system according to claim 23, wherein
in the direction of the axis, the gas supplying port is arranged further apart from the outlet than the material supplying port.

25. The shaping system according to any one of claims 1 to 24, wherein
the gas supply apparatus has the gas supplying port serving as a first supplying port, and
the gas supply apparatus has a second gas supplying port which can supply inert gas into a space inside the cover member.

26. The shaping system according to claim 25, wherein
a position of the second gas supplying port in the direction of the axis is different from a position of the first gas supplying port in the direction of the axis.

27. The shaping system according to one of claims 25 and 26, wherein
a position of the second gas supplying port in the direction around the axis is different from a position of the first gas supplying port in the direction around the axis.

28. The shaping system according to any one of claims 1 to 27, wherein
in the inner surface of the cover member, a guide section is provided which guides a flow of the inert gas.

29. The shaping system according to any one of claims 1 to 28, wherein
the inner surface of the cover member is a surface of a conical or an elliptical cone shape which converges toward the outlet side from an opposite side of the outlet in a direction parallel to the axis.

30. The shaping system according to any one of claims 1 to 29, further comprising:
a movable apparatus which relatively moves the target surface and the beam; and
a controller which controls the movable apparatus and an irradiation state of the beam from the beam irradiation section, based on 3D data of a three-dimensional shaped object formed on the target surface, so that shaping is applied to a target portion on the target surface by supplying the shaping material from the material supplying port, while the target surface and the beam are relatively moved.

31. A shaping method in which a three-dimensional shaped object is formed on a target surface using a beam, comprising:
emitting a beam, which passes through an optical path tilted with respect to an axis, from a beam irradiation section;
supplying along the axis a powdered shaping material which is to be irradiated by the beam; and
supplying an inert gas, via a gas supplying port, into a space inside a cover member which has an inner surface that gradually converges from a side at one end to a side at the other end and has an outlet formed at the side at the other end through which a beam from the beam irradiation section passes, wherein
the inert gas flows outside the space via the outlet of the cover member, and
the shaping material is supplied to the target surface outside the space via the outlet of the cover member.

32. A shaping method in which a three-dimensional shaped object is formed on a target surface using a beam, comprising:
emitting a beam, which passes through an optical path tilted with respect to an axis, from a beam irradiation section;
supplying along the axis a powdered shaping material which is to be irradiated by the beam; and
supplying an inert gas, via a gas supplying port, into a space inside a cover member which has an inner surface arranged to surround at least a part of the optical path and has an outlet formed through which a beam from the beam irradiation section passes, wherein
the inert gas flows toward the outlet along the inner surface of the cover member in a swirling flow,
the inert gas flows outside the space via the outlet of the cover member, and
the shaping material is supplied to the target surface outside the space via the outlet of the cover member.

33. A shaping method in which a three-dimensional shaped object is formed on a target surface using a beam, comprising:
emitting a beam, which passes through an optical path tilted with respect to an axis, from a beam irradiation section;
supplying along the axis a powdered shaping material which is to be irradiated by the beam; and
supplying an inert gas, via a gas supplying port, into a space inside a cover member which has an inner surface arranged to surround at least a part of the optical path and has an outlet formed through which a beam from the beam irradiation section passes, wherein
the inert gas flows toward the outlet in a swirling flow around the axis,
the inert gas flows outside the space via the outlet of the cover member, and
the shaping material is supplied to the target surface outside the space via the outlet of the cover member.

34. A shaping method in which a three-dimensional shaped object is formed on a target surface using a beam, comprising:
emitting a beam, which passes through an optical path tilted with respect to an axis, from a beam irradiation section;
supplying along the axis a powdered shaping material which is to be irradiated by the beam; and
supplying an inert gas, via a gas supplying port, into a space inside a cover member which has an inner surface that gradually converges from a side at one end to a side at the other end and has an outlet formed at the side at the other end through which a beam from the beam irradiation section passes, wherein
the inert gas flows outside the space via the outlet of the cover member, and
the shaping material is supplied to the target surface outside
the space via the outlet of the cover member.
